# EUROPÄISCHE PATENTSCHRIFT

(11) **EP 1 484 350 B1**
(45) Veröffentlichungstag und Bekanntmachung des Hinweises auf die Patenterteilung: **05.10.2011**
(21) Anmeldenummer: 04012191.5
(22) Anmeldetag: 24.05.2004
(51) Int. Cl.: C08G 18/42, C08G 18/72, C09D 175/06

(54) **Lichtechte PUR-Klarlacke**
Lightfast clear PUR lacquers
Revêtements PUR transparents stables à la lumière

(30) Priorität: 06.06.2003 DE 10325669
(43) Veröffentlichungstag der Anmeldung: 08.12.2004
(73) Patentinhaber: Bayer MaterialScience AG, 51368 Leverkusen (DE)
(72) Erfinder: Dietrich, Bernd-Peter, 41065 Mönchengladbach (DE); Halpaap, Reinhard, Dr., 51519 Odenthal (DE); Irle, Christoph, Dr., 08960 Sant Just Desvern Barcelona (ES); Niesten, Meike, Dr., 51061 Köln (DE); Tillack, Jörg, Dr., 51427 Bergisch Gladbach (DE)

(56) Entgegenhaltungen:
- EP-A- 0 693 512
- CH-A5- 610 004
- DE-A1- 19 828 935

## Beschreibung

Die Erfindung betrifft neue lösemittelfreie Zweikomponenten-Polyurethan-Bindemittelgemische zur Herstellung hochwertiger vergilbungsfreier Beschichtungen oder Formteile und ein Verfahren zu ihrer Herstellung.

Polyurethan-Systeme (PUR-Systeme) und ihre Verwendung zur Herstellung von Formteilen und Beschichtungen sind allgemein bekannt und z.B. in Ullmann's Encyclopedia of Industrial Chemistry Vol A21, Polyurethanes, Dieterich, Uhlig, 1992 S. 665-716 beschrieben.

Aufgrund der VOC-Problematik sind lösemittel- und abspalterfreie PUR-Systeme von großem Interesse, da sie nach Applikation weitgehend ohne Emission flüchtiger Bestandteile ausgehärtet werden können. Außerdem können auf diese Weise Substrate beschichtet werden, die lösemittelempfindlich sind. Lösemittelfreie Bindemittelgemische sind vor allem bei Dickschichtanwendungen gefragt, sowohl aus ökologischen Gründen aber auch weil die vollständige Emission des Lösemittels unter gleichzeitiger Bildung einer homogenen, blasenfreien Schicht nicht möglich ist.

Massive Formteile können nach allgemein bekannten Verfahren wie Handguss oder durch RIM (Reaction-injection-molding)-Verfahren hergestellt werden. Besonders vorteilhaft zur Herstellung von Beschichtungen mit hoher Schichtstärke ist die sogenannte In-Mould-Coating (IMC) Technologie bei der die Beschichtungskomponenten auf das entsprechende zu beschichtende Objekt in einem Formwerkzeug aufgetragen und ausgehärtet werden. Der Oberflächenglanz des beschichteten Substrats kann beispielsweise durch nachträgliches Polieren verbessert werden. Die großen Vorteile der IMC-Technik sind schnelle Verarbeitungszeiten und ein sehr niedriger Verlust an Rohstoffen.

Besonders wichtig für die transparente Beschichtung z.B. im Fahrzeugbau oder der Möbelindustrie sind Kratzfestigkeit, hoher Glanz und eine besonders niedrige Tendenz zu Bindemittelvergilbung. Lacke mit einer Glasübergangstemperatur > 70°C sind hier besonders vorteilhaft, da sie sich mechanisch, z.B. durch Polieren, nachbearbeiten lassen.

Nach EP-A 0 943 637 und 0 978 523 sind transparente Polyurethan-Beschichtungen mit einer T_{g} > 70°C auf Basis von Di- und/oder Polyisocyanaten in Kombination mit Polyether- und/oder Polyesterpolyolen und gegebenenfalls niedermolekularen mehrfachfunktionellen Alkoholen beschrieben. Darüber hinaus lehren die genannten Dokumente, dass die Polyolkomponente eine mittlere Hydroxylfunktionalität > 3 aufweisen muss, um eine entsprechend hohe T_{g} zu erreichen. Nachteilig ist allerdings ihre Vergilbungsempfindlichkeit, so dass sie sich nicht als hochwertige lichtechte Substratbeschichtungen eignen.

EP-A 0 693 512 lehrt die Herstellung lichtechter abriebfester und Lösemittel freier Polyurethan-Beschichtungen durch Verwendung von Mischungen aus HDI-Polyisocyanaten mit Isocyanurat-Polyisocyanaten auf Basis cycloaliphatischer Diisocyanate. Als isocyanatreaktive Komponente zur Vernetzung werden dabei Polyhydroxyverbindungen vom Polyester-, Polyether-, Polycarbonat-, oder Polyestercarbonat-Typ sowie Ricinusöl und -derivate offenbart.

Aufgabe der Erfindung war nun die Bereitstellung eines Bindemittelgemisches, das lösemittelfrei applizierbar ist und zu vergilbungsfreien, nachpolierbaren Beschichtungen mit ausreichende Härte (T_{g} > 70°C) führt.

Es konnte nun gefunden werden, dass Mischungen aus Hexamethylendiisocyanat (HDI) basierenden Polyisocyanaten mit Polyisocyanaten basierend auf cycloaliphatischen Polyisocyanaten in Kombination mit ethergruppenfreien Polyolmischungen einer mittleren OH-Funktionalität < 3 basierend auf niedermolekularen Polyhydroxyverbindungen und Polyesterpolyolen aromatischer Carbonsäuren zu besonders vergilbungsarmen Lackschichten mit T_{g} > 70°C führen.

Gegenstand der Erfindung sind Bindemittelgemische enthaltend
A) eine Polyisocyanatkomponente mit einer Viskosität bei 23°C von 2.000 bis 150.000 mPas, einem NCO-Gehalt von 14 bis 23 Gew.-% und einer berechneten durchschnittlichen NCO-Funktionalität von mindestens 2,8,
   enthaltend
   A1) 40 bis 80 Gew.-% eines oder mehrerer Polyisocyanate auf Basis von Hexamethylendiisocyanat (HDI) mit einem NCO-Gehalt von 16 bis 24 Gew.-% sowie
   A2) 20 bis 60 Gew.-% eines oder mehrerer | Polyisocyanate auf Basis cycloaliphatischer Diisocyanate mit einem NCO-Gehalt von 10 bis 22 Gew.-%,
B) eine Polyolkomponente mit einer mittleren OH-Funktionalität < 3, einer Viskosität bei 23°C von 5.000 bis 150.000 mPas sowie einer Hydroxylzahl von 400 bis 700 mg KOH/g enthaltend
   B1) 50 bis 80 Gew.-% eines oder mehrerer auf aromatischen Carbonsäuren basierender ethergruppenfreier Polyesterpolyole einer mittleren OH-Funktionalität < 3, einer Hydroxylzahl von 200 bis 500 mg KOH/g und einem zahlenmittleren Molekulargewicht von 200 bis 900 g/mol sowie
   B2) 20 bis 50 Gew.-% einer oder mehrerer von den Verbindungen der Komponente B1) verschiedener ethergruppenfreier hydroxyfunktioneller Verbindungen einer mittleren OH-Funktionalität von mindestens 1,8 und einem zahlenmittleren Molekulargewicht Mₙ von 32 bis 1.000 g/mol,
C) gegebenenfalls einen oder mehrere Katalysatoren
D) gegebenenfalls Hilfsmittel und/oder Zusatzstoffe.

Die Mengen der Komponenten A1) und A2) bzw. B1) und B2) sind bevorzugt so zu wählen, dass sie sich zu 100 Gew.-% aufaddieren.

Ein weiterer Gegenstand der Erfindung ist ein Verfahren zur Herstellung der erfindungsgemäßen Bindemittelgemische, bei dem die Komponenten A) bis D) gegebenenfalls bei erhöhter Temperatur vermischt werden.

Ein weiterer Gegenstand der Erfindung ist die Verwendung der erfindungsgemäßen Bindemittelgemische zur Herstellung von Formkörpern und Beschichtungen.

Die Komponente A) weist bevorzugt eine mittlere NCO-Funktionalität von 3 bis 5 auf.

Bei den Polyisocyanaten A1) handelt es sich um die an sich bekannten Allophanat-, Biuret-, Isocyanurat-, Iminooxadiazindion-, Oxadiazintrion-, Uretdion- und/oder Urethangruppen-aufweisenden Polyisocyanate auf HDI-Basis mit einer Viskosität bei 23°C von 100 bis 12.000 mPas, einem Gehalt an Isocyanatgruppen von 16 bis 24 Gew.-% und einem Gehalt an monomerem HDI von weniger als 0,5 Gew.-%.

Diese sind beispielhaft in Laas et al., J. Prakt. Chem. 336, 1994, 185-200, EP-A 0 798 299 und DE-A 167 066 6 beschrieben.

Bevorzugt handelt es sich bei den Polyisocyanaten der Komponente A1) um Polyisocyanate auf HDI-Basis der vorstehende genannten Art mit Uretdion-, Allophanat-, Isocyanurat- und/oder Iminooxadiazintrionstruktur, die bei 23°C eine Viskosität von 100 bis 1.600 mPas und einen Gehalt an Isocyanatgruppen von 18 bis 24 Gew.-% aufweisen.

Besonders bevorzugt handelt es sich bei den Polyisocyanaten der Komponente A1) um Isocyanuratgruppen- und/oder Iminooxadiazindiongruppen-aufweisende HDI-Polyisocyanate der vorstehend genannten Art mit einer Viskosität bei 23°C von 300 - 1.400 mPas und mit einem Gehalt an Isocyanatgruppen von 20 bis 24 Gew.-%.

Bei den Polyisocyanaten der Komponente A2) handelt es sich um die an sich bekannten Allophanat-, Biuret-, Isocyanurat-, Uretdion- und/oder Urethangruppen-haltigen Polyisocyanate auf Basis cycloaliphatischer Diisocyanate mit einem Gehalt an Isocyanatgruppen von 10 bis 22 Gew.-% und einem Gehalt an monomeren Diisocyanaten von weniger als 0,5 Gew.-%, wobei diese Polyisocyanate bei 23°C in fester Form vorliegen oder eine Viskosität von mehr als 200.000 mPas aufweisen. Beispielhaft seien in diesem Zusammenhang als cycloaliphatische Diisocyanate 1-Isocyanato-3,3,5-trimethyl-5-isocyanatomethylcyclohexan (Isophorondiisocyanat; IPDI), 2,4'- und 4,4'-Diisocyanatodicyclohexylmethan, 1,3- und 1,4-Diisocyanatocyclohexan, 2(4)-Methyl-1,3-diisocyanatocyclohexan, 1,3- und 1,4-Diisocyanatomethylcyclohexan, 1-lsocyanato-1-methyl-4(3)-isocyanatomethylcyclohexan sowie beliebige Mischungen dieser Diisocyanate genannt.

Bevorzugt handelt es sich bei den Polyisocyanaten der Komponente A2) um Verbindungen der vorstehend genannten Art mit Isocyanuratgruppen, die an sich bekannt sind und exemplarisch in Laas et al., J. Prakt. Chem. 336, 1994, 185-200 und in der darin zitierten Originalliteratur beschrieben werden.

Besonders bevorzugt handelt es sich bei den Polyisocyanaten der Komponente A2) um solche der vorstehend beschriebenen Art auf Basis von IPDI und/oder 2,4'- und 4,4'-Diisocyanatodicyclohexylmethan mit einem Gehalt an Isocyanatgruppen von 13 bis 19 Gew.-%.

Ganz besonders bevorzugte Polyisocyanate der Komponente A2) sind solche der vorstehend beschriebenen Art auf Basis von IPDI mit einem Gehalt an Isocyanatgruppen von 15 bis 18 Gew.-%.

Bei den Basis-Isocyanaten der Komponenten A1) und A2) ist es unerheblich, ob diese nach Phosgen- oder phosgenfreien Verfahren hergestellt wurden.

Die Polyolkomponente B) hat eine mittlere OH-Funktionalität < 3,0, bevorzugt von 2,0 bis 2,5, eine Viskosität bei 23°C von 5.000 bis 150.000 mPas, bevorzugt 10.000 bis 100.000 mPas, besonders bevorzugt 10.000 bis 70.000 mPas und eine mittlere Hydroxylzahl von 400 bis 700 mg KOH/g, vorzugsweise 450 bis 650 mg KOH/g.

Als Bestandteil der Polyolkomponente B) geeignete ethergruppenfreie Polyesterpolyole der Komponente B1) sind solche einer mittleren OH-Funktionalität < 3,0, bevorzugt von 2,0 bis 2,5, mit einer Hydroxylzahl von 200 bis 500 mg KOH/g, bevorzugt 200 bis 400 mg KOH/g und einem zahlenmittleren Molekulargewicht von 200 bis 900 g/mol, bevorzugt 200 bis 750 g/mol, wie sie sich in bekannter Weise durch Umsetzung von mehrwertigen Alkoholen mit unterschüssigen Mengen mehrwertiger Carbonsäuren, Carbonsäureanhydride, Lactonen oder Polycarbonsäureestern niedermolekularer C₁-C₄ Alkohole herstellen lassen.

Zur Herstellung der Polyesterpolyole der Komponente B1) werden eine oder mehrere aromatische mehrwertige Carbonsäuren oder deren Anhydrid-, Lacton- oder Esterderivate, gegebenenfalls in Mischung mit einer oder mehreren aliphatischen oder cycloaliphatischen mehrwertigen Carbonsäuren oder deren Derivaten, eingesetzt. Geeignet sind besonders Verbindungen mit einem zahlenmittleren Molekulargewicht von 118 bis 300 g/mol und einer mittleren Carboxylfunktionalität ≥ 2, wie beispielsweise Bernsteinsäure, Adipinsäure, Sebanicsäure, Phthalsäure, Isophthalsäure, Terephthalsäure, Trimellitsäure, Phthalsäureanhydrid, Tertrahydrophthalsäure, Maleinsäure, Maleinsäureanhydrid, Terephthalsäuredimethylester oder Terephthalsäure-bis-glykolester bzw. deren Anhydrid-, Lacton- oder Esterderivate. Bevorzugt sind Mischungen aus Adipinsäure und Isophthalsäure.

Zur Herstellung dieser Polyesterpolyole geeignete mehrwertige Alkohole sind bevorzugt solche mit einem zahlenmittleren Molekulargewichts von 62 bis 400 g/mol, wie z.B. 1,2-Ethandiol, 1,2-und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-(Bis(hydroxymethyl)-1,3-propandiol. Bevorzugt sind 1,3-Butandiol, Neopentylglykol und/oder Trimethylolpropan.

Zur Herstellung der Polyesterpolyole können die genannten mehrwertigen Carbonsäuren und/oder deren Anhydrid-, Lacton- oder Esterderivaten und mehrwertigen Alkohole katalysatorfrei oder gegebenenfalls in Gegenwart von Veresterungskatalysatoren, zweckmäßigerweise in einer Atmosphäre aus Inertgas, wie z.B. Stickstoff, Kohlendioxid, Helium, Argon, in der Schmelze bei Temperaturen von 150 bis 220°C, vorzugsweise 180 bis 220°C gegebenenfalls unter vermindertem Druck bis zu der gewünschten Säurezahl, die vorteilhafterweise kleiner als 10, vorzugsweise kleiner 5 mg KOH/g ist, polykondensiert werden. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Die ethergruppenfreie hydroxyfunktionelle Komponente B2) enthält eine oder mehrere von den Verbindungen aus B1) verschiedene Hydroxyverbindungen mit einem zahlenmittleren Molekulargewicht von 32 bis 1.000 g/mol, einer mittleren OH-Funktionalität von mindestens 1,8, bevorzugt 1,8 bis 6,0. Diese sind entweder niedermolekulare ein- oder mehrwertige Alkohole oder höhermolekulare Polyole auf Polyester-Basis entsprechend den vorstehenden Angaben.

Beispielsweise eingesetzt werden niedermolekulare Hydroxyverbindungen des Molekulargewichts 32 bis 350 g/mol wie 1,2-Ethandiol, 1,2-Propandiol, 1,3-Butandiol, 1,2-, 1,3-, 1,4-, 2,3-, 1,5-Pentandiol, 3-Methyl-1,5-pentandiol, 1,6-Hexandiol, 2-Ethyl-1,3-hexandiol, 2-Methyl-1,3-propandiol, 2,2-Dimethyl-1,3-propandiol, 2-Butyl-2-ethyl-1,3-propandiol, 2,2,4-Trimethyl-1,3-pentandiol- 1,8-Octandiol, höhermolekulare α,ω-Alkandiole mit 9 bis 18 Kohlenstoffatomen, Cyclohexandimethanol, Cyclohexandiol, Glycerin, Trimethylolpropan, 1,2,4-Butantriol, 1,2,6-Hexantriol, Bis(trimethylolpropan), Pentaerythrit, Mannit oder Methylglykosid. Anteilig, aber weniger bevorzugt, können auch einwertige Alkohole wie z.B. Methanol, Ethanol, Propanol oder Butanol eingesetzt werden.

Höhermolekulare Polyester-basierende Polyole der Komponente B2) können beispielsweise aus den unter B1) genannten niedermolekularen Alkoholen mit Lactonen, wie z.B. ε-Caprolacton, β-Propiolacton, γ-Butyrolacton, γ- und δ-Valerolacton, 3,5,5- und 3,3,5-Trimethylcaprolacton oder beliebige Gemische solcher Lactone, hergestellt werden.

Bevorzugte Verbindungen der Komponente B2) sind Trimethylolpropan, 2-Butyl-2-ethyl-1.3-propandiol, 2,2,4-Trimethyl-1,3-pentandiol, Cyclohexandimethanol, 1,2-Propandiol und/oder 2,2-Dimethyl-1,3-propandiol (Neopentylglykol), sowie beliebige Mischungen untereinander.

Besonders bevorzugt sind Cyclohexandimethanol, 1,2-Propandiol und/oder 2,2-Dimethyl-1,3-propandiol sowie beliebige Mischungen untereinander.

Ganz besonders bevorzugt als Verbindungen der Komponente B2 sind Mischungen von Cyclohexandimethanol und 1,2-Propandiol.

Es wird ausdrücklich darauf hingewiesen, dass die Verwendung von ethergruppenhaltigen Verbindungen, wie z.B. Polyalkylenoxid Polyetherpolyolen als Bestandteil der Komponente B) nicht im Sinne der vorliegenden Erfindung ist.

In den erfindungsgemäßen Bindemittelgemischen werden die Komponenten A) und B) in solchen Mengenverhältnissen zueinander eingesetzt, dass das Verhältnis von NCO- zu OH-Gruppen 0,7 bis 1,5, bevorzugt 0,9 bis 1,1, besonders bevorzugt 1,0 beträgt.

Als gegebenenfalls zu verwendende Katalysatoren C) können die an sich in der Polyurethanchemie bekannten Verbindungen zur Beschleunigung der NCO/OH-Reaktion einsetzt werden (vgl. "Kunststoff Handbuch 7, Polyurethane" Carl-Hanser-Verlag, München - Wien, 1984, S. 97-98).

Dies können zum Beispiel sein: tertiäre Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octoat, Zinn(II)-ethylcaproat, Zinn(II)-palmitat, Dibutylzinn(IV)-dilaurat und Molybdänglykolat oder beliebige Gemische solcher Katalysatoren. Vorzugsweise als Verbindungen der Komponente C) sind Zinnverbindungen und tertiäre Amine zu verwenden.

Die Katalysatorkomponente C) wird, falls überhaupt, in Mengen von 0,001 bis 5 Gew.-%, bevorzugt 0,01 bis 1 Gew.-% bezogen auf die Menge der Einzelkomponenten A) und B) eingesetzt.

Gegebenenfalls enthaltene Hilfsmittel oder Zusatzstoffe D) können z.B. oberflächenaktive Substanzen, interne Trennmittel, Füllstoffe, Farbstoffe, Pigmente, Flammschutzmittel, Hydrolyseschutzmittel, Mikrobizide, Verlaufshilfsmittel, Antioxidantien wie 2,6-Di-tert-butyl-4-methylphenol, UV-Absorber vom Typ 2-Hydroxyphenyl-benzotriazol oder Lichtschutzmittel vom Typ der am Stickstoffatom substituierten oder unsubstituierten HALS-Verbindungen wie Tinuvin® 292 und Tinuvin® 770 DF (Ciba Spezialitäten GmbH, Lampertheim, DE) oder andere handelsübliche Stabilisierungsmittel, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind, oder beliebige Gemische dieser Verbindungen.

In einer bevorzugten Ausführungsform der Erfindung erfolgt die Herstellung der erfindungsgemäβen Bindemittelgemische und gegebenenfalls deren Applikation und gegebenenfalls Aushärtung nach dem Verfahren der Reaktionsspritzgusstechnik in geschlossenen Formen, z.B. zur Herstellung von Formkörpern. Ebenso bevorzugt in diesem Zusammenhang ist der Verzicht bei der genannten Technik auf eine geschlossene Form, wobei man dann das applikationsfertige Bindemittelgemisch unmittelbar auf geeignete Substrate, beispielsweise Metall, Glas, Holz oder Kunststoffe aufträgt und gegebenenfalls unter Temperatureinwirkung aushärtet. Diese ausgehärteten Beschichtungen können gegebenenfalls im Anschluss durch mechanische Verfahren wie z.B. Polieren nachbearbeitet werden.

Als Substrate zur Beschichtung mit den erfindungsgemäßen Bindemittelgemischen eignen sich insbesondere Metall, Glas, Holz oder Kunststoffe. Besonders geeignet sind sie für die Beschichtung von Ausbauteilen im Fahrzeugbau wie z.B. Armaturenbrett- Tür- oder sonstigen Flächenverkleidungen, Lenkrädern oder dergleichen, die gegebenenfalls auf einer oder mehreren Seiten ein zu beschichtendes Edelholzfumier aufweisen.

### Beispiele:

Alle Prozentangaben sind, soweit nicht anders vermerkt, als Gewichtsprozent (Gew.- %) zu verstehen.

Die Ermittlung des NCO-Gehaltes der in den Beispielen und Vergleichsbeispielen beschriebenen Harze erfolgte durch Titration gemäß DIN 53 185.

Die Viskositäten wurden bei 23°C mit einem Rotationsviskosimeter (Geschwindigkeit 40 s⁻¹) (ViscoTester® 550, Thermo Haake GmbH, D-76227 Karlsruhe) bestimmt.

Die Glasübergangstemperatur T_{g} wurde mittels DSC (Differential Scanning Calorimetrie) mit einem Mettler DSC 12E (Mettler Toledo GmbH, Giessen, DE) bei einer Aufheizgeschwindigkeit von 10°C/min bestimmt.

Die Messung der Vergilbung der hergestellten Beschichtungen erfolgte durch Applikation der Bindemittelgemische mittels Aufziehrahmen auf weiße lichtechte Trägerplatten und anschließendes Einbrennen bei 100°C für 5 min. Die Platten wurden anschließend 24 Stunden bei 23°C gelagert und dann für 7 Tage bei 90°C getempert. Durch CIELAB-Messungen nach DIN 6174 und DIN 6176 oder ISO DIS 7724 Teil 3 vor und nach Temperaturlagerung wurde der Delta-E-Wert als Maß für die Vergilbung bestimmt.

### Beispiel 1:

### Herstellung der Polyisocyanate vom Typ A)

### Polyisocyanat A1-I:

Das Isocyanuratgruppen-aufweisende HDI-Polyisocyanat A1-I wurde gemäß EP-A 330 966, Beispiel 11 hergestellt, wobei 2-Ethylhexanol statt 2-Ethyl-1,3-hexandiol als Katalysatorlösemittel eingesetzt wurde. Nach Abtrennung des überschüssigen monomeren HDI's mittels Dünnschichtdestillation wurde ein HDI-Polyisocyanat mit einem NCO-Gehalt von 22,9 %, einer Viskosität von 1.200 mPas bei 23°C und einer mittleren NCO-Funktionalität von 3,1 (berechnet aus NCO-Gehalt und zahlenmittlerem Molekulargewicht; bestimmt über GPC-Messung) erhalten.

### Polyisocyanat A1-II:

4000 g (23,8 mol) Hexamethylendiisocyanat (HDI) wurden in einer 6-Liter-Vierhalskolben-Rührapparatur mit Rückflusskühler, Dosiervorrichtung für den Katalysator, Innenthermometer und Gaseinleitung zunächst auf 60°C erwärmt und durch einstündiges Rühren bei 20 mbar von gelösten Gasen befreit. Anschließend wurde mit Stickstoff belüftet und unter Rühren und Durchleiten eines Stickstoffstromes durch portionsweise Zugabe einer 50 Gew.-%-igen Lösung von Tetrabutylphosphoniumhydrogendifluorid, n-Bu₄P⁺ [HF₂]⁻, in iso-Propanol/Methanol (2:1) die Trimerisierung in Gang gesetzt, wodurch die Temperatur um etwa 1-2°C anstieg. Der Fortgang der Reaktion wurde durch refraktometrische Kontrolle des Brechungsindex bei 20°C (n_{D(Start)} = n_{D(HDI)} = 1,4523 bei 20°C) mit einem GPR 11-37 der Firma Index Instruments, UK verfolgt. Bei Erreichen des gewünschten NCO-Umsatzes (n_{D}²⁰(Stopp) = 1,4600) wurde die Reaktion durch Zugabe von 0,48 g einer 60 Gew.-%-igen Lösung von p-Toluolsulfonsäure in iso-Propanol je eingesetztem Gramm oben genannter Katalysatorlösung abgestoppt. Die Aufarbeitung der so erhaltenen Rohware erfolgte durch Dünnschichtdestillation im Labordünnschichtverdampfer, Typ Kurzwegverdampfer, bei einem Vakuum von 0,2 mbar und einer Temperatur des Heizmediums im Vor- bzw. Hauptverdampfer von 130 bzw. 150°C. Es wurde ein Isocyanurat- und Iminooxadiazindiongruppen aufweisendes Polyisocyanat mit einem NCO-Gehalt von 23,7 %, einer Viskosität von 65 mPas (23°C), einem HDI-Monomergehalt von unter 0,15 % und einer mittleren NCO-Funktionalität von 3,2 (berechnet aus NCO-Gehalt und zahlenmittlerem Molekulargewicht; bestimmt über GPC-Messung) erhalten.

### Polyisocyanate A2-I:

4000 g IPDI wurden bei 40°C im Vakuum entgast und unter N₂-Atmosphäre portionsweise mit 25 g einer 5 Gew.-%-igen Lösung von Trimethyl-benzylammonium-hydroxid in n-Butanol/Methanol (9:1) versetzt und bei 70°C so lange umgesetzt bis ein NCO-Gehalt von 30 % erreicht war. Die Umsetzung wurde durch Zugabe von 5 g einer 25 Gew.-%-igen Lösung von Phosphorsäuredibutylester in IPDI abgestoppt und 1 h bei 60°C nachgerührt. Monomeres IPDI wurde anschließend durch Destillation mittels eines Dünnschichtverdampfers bei 180 - 190°C und 0,2 mbar abgetrennt, wobei 1.600 g eines Festharzes mit einem NCO-Gehalt von 16.7 % und einer mittleren NCO-Funktionalität von 3,3 (berechnet aus NCO-Gehalt und zahlenmittlerem Molekulargewicht; bestimmt über GPC-Messung) erhalten wurde.

### Polyisocyanat A2-II:

2620 g 4,4'-Diisocyanatodicyclohexylmethan wurden bei 60°C mit 6 g einer 10 Gew.-%-igen Lösung von Trimethyl-benzylammoniumhydroxid in 2-Ethylhexanol : Methanol (5:1) bis zu einem NCO-Gehalt von 26,8 % trimerisiert. Zur Beendigung der Trimerisierungsreaktion wurden 0,5 g Bis(2-ethylhexylphosphat) zugegeben. Nun wurde die klare Rohlösung mit 130 g eines Isocyanuratpolyisocyanats auf Basis von HDI, das nach Beispiel 12 der EP-A 330 966 erhalten wurde, versetzt und bei 200°C und 0,15 mbar durch Dünnschichtdestillation monomeres 4,4'-Diisocyanatodicyclohexylmethan abgetrennt. Es wurde ein helles, leicht gelbliches Festharz mit einem NCO-Gehalt von 15,1 %, einem Schmelzpunkt von 100°C, einem Gehalt an monomerem Diisocyanat von < 0,2 % und einer mittleren NCO-Funktionalität von 3,5 (berechnet aus NCO-Gehalt und zahlenmittlerem Molekulargewicht; bestimmt über GPC-Messung) erhalten.

### Polyisocyanate vom Typ A):

Die festen Polyisocyanate vom Typ A2) auf Basis cycloaliphatischer Diisocyanate wurden grob zerkleinert und in einem Reaktionsgefäß bei Raumtemperatur gemeinsam mit dem flüssigen HDI-Polyisocyanat vom Typ A1) unter N₂-Atmosphäre vorgelegt. Zum Lösen des Festharzes und Homogenisieren der Mischung wurde auf 100 - 140°C aufgeheizt und so lange gerührt bis eine nahezu klare Lösung erhalten wurde. Anschließend wurde auf 50°C abgekühlt und über einen 200 µm Filter filtriert.

Auf diese Weise wurden die folgenden Polyisocyanate hergestellt.

### Polyisocyanat A-I

Mischung aus 70 Gew.-% HDI-Trimerisat A1-I und 30 Gew.-% IPDI-Trimerisat A2-I, NCO-Gehalt: 21,2 %, Viskosität bei 23°C 20.000 mPas, NCO-Funktionalität: 3,2

### Polyisocyanat A-II

Mischung aus 60 Gew.-% HDI-Trimerisat A1-I und 40 Gew.-% IPDI-Trimerisat A2-I, NCO-Gehalt: 20,3 %, Viskosität bei 23°C 140.000 mPas, NCO-Funktionalität: 3,2

### Polyisocyanat A-III:

Mischung aus 70 Gew.-% HDI-Trimerisat A1-II und 30 Gew.-% IPDI-Trimerisat A2-I, NCO-Gehalt = 21,7 %, Viskosität bei 23°C 12.100 mPas, NCO-Funktionalität: 3,2

### Polyisocyanat A-IV:

Mischung aus 60 Gew.-% HDI-Trimerisat A1-II und 40 Gew.-% IPDI-Trimerisat A2-I, NCO-Gehalt: 21,1 %, Viskosität bei 23°C 46.000 mPas, NCO-Funktionalität: 3,2

### Polyisocyanat A-V:

Mischung aus 70 Gew.-% HDI-Trimerisat A1-II und 30 Gew.-% Dicyclohexylmethandiisocyanat-Trimerisat A2-II, NCO-Gehalt = 20,8 %, Viskosität bei 23°C 19.800 mPas, NCO-Funktionalität: 3,3

### Polyisocyanat A-VI:

Prepolymer aus IPDI und einem Trimethylolpropan gestarteten Polypropylenoxid Polyol, OH-Zahl 878 (Polyether V250, Bayer AG, Leverkusen).

Innerhalb einer Stunde wurden unter Rühren bei 80°C 13 g Polyether V250 zu 87 g IPDI getropft, wobei das Verhältnis von NCO zu OH 3,8 betrug. Nach beendeter Zugabe wurde die Umsetzung für 2 Stunden bei der gleichen Temperatur vervollständigt bis der theoretischen NCO-Gehalt von 24,4 % erreicht wurde.

Das Prepolymer hatte einen NCO-Gehalt von 24,4 %, eine Viskosität bei 23°C von 13.100 mPas und einen Gehalt an freiem IPDI von 11,7 %.

### Polyisocyanat A-VII:

Mischung aus 70 Gew.-% HDI-Uretdion/Trimerisat (hergestellt gemäß Beispiel 2 der EP-A 0377177, NCO-Gehalt 22,5 %, Viskosität bei 23°C 170 mPas, NCO-Funktionalität aus GPC und NCO-Gehalt: 2,5) und 30 Gew.-% IPDI-Trimerisat A2-I, NCO-Gehalt 20,0 %, Viskosität bei 23°C 3.000 mPas, Momomergehalt < 0,5 %, NCO-Funktionalität: 2,7.

### Beispiel 2:

### Herstellung der Polyole vom Typ B)

### Polyester vom Typ B1)

Die Reaktanden zur Polyesterherstellung wurden gemäß unterstehender Tabelle zusammen in einen Reaktor, der mit Rührer, Heizung, automatischer Temperatursteuerung, Stickstoffeinleitung, Kolonne, Wasserabscheider und Vorlage ausgerüstet war, eingewogen und unter Rühren und Durchleiten von Stickstoff so auf 200°C aufgeheizt, dass die Kopftemperatur an der Kolonne 103°C nicht überstieg. Nach beendeter Destillation der theoretisch berechneten Menge des Reaktionswassers wurde der Wasserabscheider durch eine Destillationsbrücke ersetzt und die Reaktionsmischung so lange bei 200°C gerührt, bis die Kopftemperatur der Kolonne auf unter 90°C gesunken war. Die Kolonne wurde entfernt und das Produkt wurde bis zu einer Säurezahl von≤ 5 mg KOH/g weiter kondensiert.

**Tabelle 1:**

| Polyester B1-I bis B1 -IV (Mengenangaben in Gewichtsteilen) | | | | |
|---|---|---|---|---|
| **Zusammensetzung** | **B1-I** | **B1-II** | **B1-III** | **B1-IV** |
| Trimethylolpropan | 20,55 | 19,02 | 19,57 | 19,44 |
| 1,3-Butandiol | 24,90 | 23,05 | 23,71 | 23,55 |
| Neopentylglykol | 14,82 | 13,80 | 14,11 | 14,02 |
| Adipinsäure | 53,74 | 0 | 20,10 | 10,3 |
| Isophthalsäure | 0 | 56,35 | 35,00 | 45,00 |
| Reaktionswasser | -13,3 | -12,22 | -12,49 | -12,31 |
| **Kennzahlen:** | | | | |
| Mittleren Funktionalität | 2,7 | 2,7 | 2,7 | 2,7 |
| OH-Zahl (-) | 314 | 281 | 287 | 294 |
| Viskosität 23°C (mPa.s) | 4.000 | n.m. | n.m. | n.m. |
| n.m.: nicht messbar, Viskosität bei Raumtemperatur zu hoch (> 300.000 mPas) | | | | |

### Herstellung der Polyole vom Typ B

Nun wurden die vorstehend hergestellten Polyester bei 100°C mit Alkoholen (B2) gemäß nachfolgender Tabelle vermischt und 2h bei 100°C nachgerührt.

**Tabelle 2:**

| Polyole B-I bis B-IV (Mengenangaben in Gewichtsteilen) | | | | |
|---|---|---|---|---|
| **Zusammensetzung** | **B-I** | **B-II** | **B-III** | **B-IV** |
| Polyester B1-I | 53,9 | | | |
| Polyester B1-II | | 53,9 | | |
| Polyester B1-III | | | 66,9 | |
| Polyester B1 -IV | | | | 66,9 |
| Trimethylolpropan | 9,2 | 9,2 | | |
| 2-Buthyl-2-Ethyl-1,3-Propandiol | 17,4 | 17,4 | | |
| 2,2,4-Trimethyl-1,3-pentanediol | 19,5 | 19,5 | | |
| Cyclohexandimethanol | | | 23,15 | 23,15 |
| 1,2-Propandiol | | | 9,93 | 9,93 |
| **Kennzahlen** | | | | |
| mittlere Funktionalität | 2,4 | 2,4 | 2,5 | 2,5 |
| OH-Zahl | 512 | 538 | 518 | 515 |
| Viskosität bei 23 °C (mPas) | 1.900 | 37.000 | 14.400 | 38.800 |

### Polyol B-V

Polyol-Mischung mit einem OH-Zahl von 657 und einer Viskosität bei 23°C von 10.600 mPas bestehend aus 50 Gew.-% eines Trimethylolpropan gestarteten Polypropylenoxid Polyols mit einem OH-Zahl 878 und einer Viskosität bei 23°C von 6.100 mPas (Polyether V 250, Bayer AG, Leverkusen), 25 Gew.-% eines Ethylendiamin gestarteten Propylenoxid Polyols mit einem OH-Zahl von 792 und einer Viskosität bei 23°C von 33.000 mPas (Polyether E 810, Bayer AG, Leverkusen) und 25 Gew.-% eines Polyester Polyols auf der Basis Adipinsäure, Diethylenglykol und Trimethylolpropan mit einem OH-Zahl von 60, einer mittleren OH-Funktionalität von 2,7 (Desmophen® 2015W, Bayer AG, Leverkusen).

### Polyol B-VI

Bei 23°C festes Polyester Polyol auf Basis von Phthalsäureanhydrid, Ethylenglykol und Trimethylolpropan mit einem OH-Zahl von 386 und einer mittleren Funktionalität von 3,4.

### Polyol B-VII

Polyester Polyol mit einem OH-Zahl von 60 und einer mittleren Funktionalität von 2,7 auf der Basis Adipinsäure, Diethylenglykol und Trimethylolpropan, Viskosität bei 75°C ist 1.000 mPas (Desmophen® 2015W, Bayer AG Leverkusen).

### Beispiel 3:

### Beschichtungen (erfindungsgemäß)

100 g des jeweiligen Polyols vom Typ B) wurden mit 100 ppm (bezogen auf gesamte Formulierung) DBTL als Katalysator unter Rühren versetzt. Dann wurden diese Polyolkomponente, die Polyisocyanatkomponente vom Typ A) und alle zur Applikation benötigten Geräte auf 50°C erwärmt, bevor beide Komponenten zusammengegeben wurden. Das so erhaltene Beschichtungsmittel wurde mit einem Aufziehrahmen von 800 µm auf eine Glasplatte appliziert und für 5 Minuten bei 100°C ausgehärtet.

**Tabelle 3:**

| Beschichtungsmittel 3-1 bis 3-7 (Mengenangaben in Gewichtsteilen) | | | | | | | |
|---|---|---|---|---|---|---|---|
| Beispiel | 3-1 | 3-2 | 3-3 | 3-4 | 3-5 | 3-6 | 3-7 |
| Polyol B-II | 100 | | | | | | |
| Polyol B-III | | 100 | 100 | | | 100 | 100 |
| Polyol B-IV | | | | 100 | 100 | | |
| Polyisocyanat A-I | 190 | 183 | | 182 | | | |
| Polyisocyanat A-II | | | 185 | | 184 | | |
| Polyisocyanat A-III | | | | | | 162 | |
| Polyisocyanat A-IV | | | | | | | 185 |
| DBTL (ppm) | 100 | 100 | 100 | 100 | 100 | 100 | 100 |
| T_{g} (°C) | 75 | 76 | 86 | 78 | 81 | 71 | 81 |
| Gelbwert nach Lage- | 1,09 | 0,99 | 0,57 | 1,26 | 0,95 | 0,34 | 0,39 |
| rung, 7d/90°C | | | | | | | |
| Aussehen | klar | klar | klar | klar | klar | klar | klar |

Die erfindungsgemäßen Beschichtungen 3-1 bis 3-7 sind transparent und zeichnen sich durch eine hohe T_{g} ( > 70°C) und glatte Oberflächen bei gleichzeitig sehr niedriger Vergilbungsneigung (ΔE < 1,5) aus.

### Beispiel 4:

### Beschichtungen (Vergleich)

Das jeweilige Polyol wurde mit DBTL als Katalysator unter Rühren versetzt und auf 50°C aufgeheizt. Dann wurde die ebenfalls auf 50°C temperierte Polyisocyanatkomponente unter Rühren zugegeben Anschließend wurde das so erhaltene Beschichtungsmittel mit einem Aufziehrahmen von 800 µm auf eine Glasplatte appliziert und für 5 Minuten bei 100°C ausgehärtet.

**Tabelle 4:**

| **Beschichtungsmittel 4-1 bis 4-5** (Mengenangaben in Gewichtsteilen) | | | | | |
|---|---|---|---|---|---|
| Beispiel | 4-1 | 4-2 | 4-3 | 4-4 | 4-5 |
| Polyol B-I | | | | | 100 |
| Polyol B-III | | | | 100 | |
| Polyol B-V | 100 | | | | |
| Polyol B-VI | | | 100 | | |
| Polyol B-VII | | 100 | | | |
| Polyisocyanat A-I | | 21,4 | 137 | | 183 |
| Polyisocyanat A-VI | 200 | | | | |
| Polyisocyanat A-VII | | | | 198 | |
| DBTL (ppm) | 100 | 100 | 100 | 100 | 100 |
| T_{g} (°C) | 119 | n.m | n.m. | 62 | 54 |
| Gelbwert nach Lagerung, 7d | 5,19 | <1,5 | <1,5 | <1,5 | <1,5 |
| /90°C | | | | | |
| Aussehen | klar | weich, matt | trüb | klar | klar |
| n.m.: nicht messbar, Beschichtung ist weich und hat keine messbare T_{g} oberhalb Raumtemperatur. | | | | | |

Beschichtungen nach Vergleichbeispiel 4-1 (Nachstellung des Beispiels 3 aus EP-A-0 943 637) weisen eine relativ starke Vergilbung auf, weshalb die Formulierung zur Herstellung hochwertiger vergilbungsfreier Beschichtungen nicht geeignet ist.

Beschichtungen des Beispiels 4-2 auf Basis des erfindungsgemäß zu verwendenden Polyisocyanats führen mit einem Polyesterpolyol auf Basis aliphatischer Carbonsäuren mit einer mittleren OH-Funktionalität von 2,7 (Polyol B-VII) zu sehr weichen und matten Filmen.

Beschichtungen nach Vergleichsbeispiel 4-3 mit einem Phthalsäure-basierenden Polyester einer Funktionalität von 3,4 als Bindemittel führen mit den erfindungsgemäß einzusetzenden Polyisocyanaten zu trüben Filmen.

Beschichtungen nach Vergleichsbeispiel 4-5 auf Basis von Adipinsäure mit einer mittleren Funktionalität von 2,7 führen bei Verwendung der erfindungsgemäß einzusetzenden Polyisocyanate zu einer zu niedrigen T_{g} von 54°C.

Beschichtungen nach Vergleichsbeispiel 4-4 auf Basis des erfindungsgemäßen Adipinsäure/Isophthalsäure-Polyols mit einer mittleren Funktionalität von 2,7 führen bei Verwendung der Polyisocyanate aus EP 0 693 512 B1 zu einem niedrigen T_{g} von 62°C.

## Patentansprüche

1. Bindemittelgemische enthaltend
A) eine Polyisocyanatkomponente mit einer Viskosität bei 23°C von 2.000 bis 150.000 mPas, einem NCO-Gehalt von 14 bis 23 Gew.-% und einer berechneten durchschnittlichen NCO-Funktionalität von mindestens 2,8,
enthaltend
A1) 40 bis 80 Gew.-% eines oder mehrerer Polyisocyanate auf Basis von Hexamethylendiisocyanat (HDI) mit einem NCO-Gehalt von 16 bis 24 Gew.-% sowie
A2) 20 bis 60 Gew.-% eines oder mehrerer Polyisocyanate auf Basis cycloaliphatischer Diisocyanate mit einem NCO-Gehalt von 10 bis 22 Gew.-%,
B) eine Polyolkomponente mit einer mittleren OH-Funktionalität < 3, einer Viskosität bei 23°C von 5.000 bis 150.000 mPas sowie einer Hydroxylzahl von 400 bis 700 mg KOH/g enthaltend
B1) 50 bis 80 Gew.-% eines oder mehrerer auf aromatischen Carbonsäuren basierender ethergruppenfreier Polyesterpolyole einer mittleren OH-Funktionalität < 3, einer Hydroxylzahl von 200 bis 500 mg KOH/g und einem zahlenmittleren Molekulargewicht von 200 bis 900 g/mol sowie
B2) 20 bis 50 Gew.-% einer oder mehrerer von den Verbindungen der Komponente B1) verschiedener ethergruppenfreier hydroxyfunktioneller Verbindungen einer mittleren OH-Funktionalität von mindestens 1,8 und einem zahlenmittleren Molekulargewicht Mₙ von 32 bis 1.000 g/mol,
C) gegebenenfalls einen oder mehrere Katalysatoren
D) gegebenenfalls Hilfsmittel und/oder Zusatzstoffe.

2. Bindemittelgemische gemäß Anspruch 1, **dadurch gekennzeichnet, dass** Komponente A) eine mittlere NCO-Funktionalität von 3 bis 5 aufweist.

3. Bindemittetgemische gemäß Anspruch 1, **dadurch gekennzeichnet, dass** in Komponente A1) Isocyanuratgruppen- und/oder Iminooxadiazindiongruppen-aufweisende HDI-Polyisocyanate mit einer Viskosität bei 23°C von 300 bis 1.400 mPas und mit einem Gehalt an Isocyanatgruppen von 20 bis 24 Gew.-% eingesetzt werden.

4. Bindemittelgemische gemäß Anspruch 1, **dadurch gekennzeichnet, dass** in Komponente A2) Isocyanuratgruppen-haltige Polyisocyanate auf IPDI- und/oder 2,4'- und 4,4'-Diisocyanatodicyclohexylmethan-Basis mit einem Gehalt an Isocyanatgruppen von 13 bis 19 Gew.-% eingesetzt werden.

5. Bindemittelgemische gemäß Anspruch 1, **dadurch gekennzeichnet, dass** Komponente B) eine mittlere OH-Funktionalität von 2,0 bis 2,5, eine Viskosität bei 23°C von 10.000 bis 70.000 mPas und eine Hydroxylzahl von 450 bis 650 mg KOH/g aufweist.

6. Bindemittelgemische gemäß Anspruch 1, **dadurch gekennzeichnet, dass** in Komponente B1) Verbindungen mit einer mittleren OH-Funktionalität von 2,0 bis 2,5, einer Hydroxylzahl von 200 bis 400 mg KOH/g und einem zahlenmittleren Molekulargewicht von 200 bis 750 g/mol eingesetzt werden.

7. Bindemittelgemische gemäß Anspruch I, **dadurch gekennzeichnet, dass** in Komponente B2) hydroxyfunktionelle Verbindungen mit einem zahlenmittleren Molekulargewicht von 32 bis 1.000 g/mol und einer mittleren OH-Funktionalität von 1,8 bis 6,0 eingesetzt werden.

8. Verfahren zur Herstellung der Bindemittelgemische gemäß Anspruch 1, bei dem die Komponenten A) bis D) gegebenenfalls bei erhöhter Temperatur vermischt werden.

9. Beschichtungen erhältlich aus Bindemittelgemischen gemäß Anspruch 1.

10. Substrate beschichtet mit Beschichtungen gemäß Anspruch 9.

## Claims

1. Binder mixtures comprising
A) a polyisocyanate component with a viscosity at 23°C of from 2000 to 150 000 mPas, with an NCO content of from 14 to 23% by weight and with a calculated average NCO functionality of at least 2.8,
comprising
A1) from 40 to 80% by weight of one or more polyisocyanates based on hexamethylene diisocyanate (HDI) with an NCO content of from 16 to 24% by weight, and also
A2) from 20 to 60% by weight of one or more polyisocyanates based on cycloaliphatic diisocyanates with an NCO content of from 10 to 22% by weight,
B) a polyol component with an average OH functionality < 3, with a viscosity at 23°C of from 5000 to 150 000 mPas, and also with a hydroxyl number of from 400 to 700 mg KOH/g comprising
B1) from 50 to 80% by weight of one or more polyester polyols which are based on aromatic carboxylic acids and which are free from ether groups and which have an average OH functionality < 3, a hydroxyl number of from 200 to 500 mg KOH/g and a number-average molar mass of from 200 to 900 g/mol, and also
B2) from 20 to 50% by weight of one or more hydroxyl-functional compounds which differ from the compounds of component B1) and which have an average OH functionality of at least 1.8 and a number-average molar mass Mₙ from 32 to 1000 g/mol,
C) optionally one or more catalysts,
D) optionally auxiliaries and/or additives.

2. Binder mixtures according to Claim 1, **characterized in that** component A) has an average NCO functionality of from 3 to 5.

3. Binder mixtures according to Claim 1, **characterized in that** component A1) uses HDI polyisocyanates which have isocyanurate groups and/or which have iminooxadiazinedione groups and which have a viscosity at 23°C of from 300 to 1400 mPas and which have a content of isocyanate groups which is from 20 to 24% by weight.

4. Binder mixtures according to Claim 1, **characterized in that** component A2) uses polyisocyanates which contain isocyanurate groups and which are based on IPDI and/or on 2,4'- and 4,4'-diisocyanatodicyclohexylmethane and which have a content of isocyanate groups which is from 13 to 19% by weight.

5. Binder mixtures according to Claim 1, **characterized in that** component B) has an average OH functionality of from 2.0 to 2.5, a viscosity at 23°C of from 10 000 to 70 000 mPas and a hydroxyl number of from 450 to 650 mg KOH/g.

6. Binder mixtures according to Claim 1, **characterized in that** component B1) uses compounds with an average OH functionality of from 2.0 to 2.5, with a hydroxyl number of from 200 to 400 mg KOH/g and with a number-average molar mass of from 200 to 750 g/mol.

7. Binder mixtures according to Claim 1, **characterized in that** component B2) uses hydroxyl-functional compounds with a number-average molar mass of from 32 to 1000 g/mol and with an average OH functionality of from 1.8 to 6.0.

8. Process for producing the binder mixtures according to Claim 1 by mixing components A) to D) optionally at elevated temperature.

9. Coatings obtainable from binder mixtures according to Claim 1.

10. Substrates coated with coatings according to Claim 9.

## Revendications

1. Mélanges de liants, contenant
A) un composant polyisocyanate présentant une viscosité à 23°C de 2000 à 150 000 mPa.s, une teneur en NCO de 14 à 23% en poids et une fonctionnalité NCO moyenne calculée d'au moins 2,8,
contenant
A1) 40 à 80% en poids d'un ou de plusieurs polyisocyanates à base d'hexaméthylènediisocyanate (HDI) présentant une teneur en NCO de 16 à 24% en poids ainsi que
A2) 20 à 60% en poids d'un ou de plusieurs polyisocyanates à base de diisocyanates cycloaliphatiques présentant une teneur en NCO de 10 à 22% en poids,
B) un composant polyol présentant une fonctionnalité OH moyenne < 3, une viscosité à 23°C de 5000 à 150 000 mPa.s ainsi qu'un indice d'hydroxyle de 400 à 700 mg de KOH/g contenant
B1) 50 à 80% en poids d'un ou de plusieurs polyesterpolyols à base d'acides carboxyliques aromatiques, exempts de groupes éther, présentant une fonctionnalité OH moyenne < 3, un indice d'hydroxyle de 200 à 500 mg de KOH/g et un poids moléculaire numérique moyen de 200 à 900 g/mole ainsi que
B2) 20 à 50% en poids d'un ou de plusieurs composés à fonctionnalité hydroxy, exempts de groupes éther, différents des composés du composant B1), présentant une fonctionnalité OH moyenne d'au moins 1,8 et un poids moléculaire numérique moyen Mₙ de 32 à 1000 g/mole,
C) le cas échéant un ou plusieurs catalyseurs,
D) le cas échéant des adjuvants et/ou des additifs.

2. Mélanges de liants selon la revendication 1, **caractérisés en ce que** le composant A) présente une fonctionnalité NCO moyenne de 3 à 5.

3. Mélanges de liants selon la revendication 1, **caractérisés en ce qu'**on utilise dans le composant A1) des polyisocyanates HDI contenant des groupes isocyanurate et/ou iminooxadiazinedione présentant une viscosité à 23°C de 300 à 1400 mPa.s et présentant une teneur en groupes isocyanate de 20 à 24% en poids.

4. Mélanges de liants selon la revendication 1, **caractérisés en ce qu'**on utilise dans le composant A2) des polyisocyanates contenant des groupes isocyanurate à base d'IPDI et/ou de 2,4'-diisocyanatodicyclohexylméthane et de 4,4'-diisocyanatodicyclohexylméthane présentant une teneur en groupes isocyanate de 13 à 19% en poids.

5. Mélanges de liants selon la revendication 1, **caractérisés en ce que** le composant B) présente une fonctionnalité OH moyenne de 2,0 à 2,5, une viscosité à 23°C de 10 000 à 70 000 mPa.s et un indice d'hydroxyle de 450 à 650 mg de KOH/g.

6. Mélanges de liants selon la revendication 1, **caractérisés en ce qu'**on utilise, dans le composant B1), des composés présentant une fonctionnalité OH moyenne de 2,0 à 2,5, un indice d'hydroxyle de 200 à 400 mg de KOH/g et un poids moléculaire numérique moyen de 200 à 750 g/mole.

7. Mélanges de liants selon la revendication 1, **caractérisés en ce qu'**on utilise dans le composant B2) des composés à fonctionnalité hydroxy présentant un poids moléculaire numérique moyen de 32 à 1000 g/mole et une fonctionnalité OH moyenne de 1,8 à 6,0.

8. Procédé pour la préparation des mélanges de liants selon la revendication 1, dans lequel les composants A) à D) sont mélangés le cas échéant à température augmentée.

9. Revêtements pouvant être obtenus à partir de mélanges de liants selon la revendication 1.

10. Substrats revêtus avec des revêtements selon la revendication 9.
